# FASCICULE DE BREVET EUROPEEN

(11) **EP 2 710 334 B1**
(45) Date de publication et mention de la délivrance du brevet: **11.09.2019**
(21) Numéro de dépôt: 12720891.6
(22) Date de dépôt: 15.05.2012
(51) Int. Cl.: G01C 25/00

(54) **PROCEDE DE CALIBRATION D'UN ENSEMBLE INERTIEL COMPORTANT UNE PHASE DYNAMIQUE ENTRE DEUX PHASES STATIQUES**
VERFAHREN ZUR KALIBRIERUNG EINER INERTEN ANORDNUNG MIT EINER DYNAMISCHEN PHASEN ZWISCHEN ZWEI STATISCHEN PHASEN
METHOD OF CALIBRATING AN INERTIAL ASSEMBLY COMPRISING A DYNAMIC PHASE BETWEEN TWO STATIC PHASES

(30) Priorité: 20.05.2011 FR 1101564
(43) Date de publication de la demande: 26.03.2014
(73) Titulaire: Safran Electronics & Defense, 92100 Boulogne-Billancourt (FR)
(72) Inventeur: BECHERET, Yves, F-92100 Boulogen-Billacourt (FR)
(74) Mandataire: Lavialle, Bruno François Stéphane
(86) Numéro de dépôt international: PCT/EP2012/059049
(87) Numéro de publication internationale: WO 2012/159939

(56) Documents cités:
- EP-A1- 0 717 264
- FR-A1- 2 915 569
- FONG W T ET AL: "Methods for in-field user calibration of an inertial measurement unit without external equipment; Methods for in-field user calibration of an IMU without external equipment", MEASUREMENT SCIENCE AND TECHNOLOGY, IOP, BRISTOL, GB, vol. 19, no. 8, 1 août 2008 (2008-08-01), page 85202, XP020144339, ISSN: 0957-0233
- SAHAWNEH L ET AL: "Development and calibration of low cost MEMS IMU for UAV applications", MECHATRONICS AND ITS APPLICATIONS, 2008. ISMA 2008. 5TH INTERNATIONAL SYMPOSIUM ON, IEEE, PISCATAWAY, NJ, USA, 27 mai 2008 (2008-05-27), pages 1-9, XP031346512, ISBN: 978-1-4244-2033-9
- PANAHANDEH G ET AL: "Calibration of the accelerometer triad of an inertial measurement unit, maximum likelihood estimation and CramÃ CR r-Rao bound", INDOOR POSITIONING AND INDOOR NAVIGATION (IPIN), 2010 INTERNATIONAL CONFERENCE ON, IEEE, PISCATAWAY, NJ, USA, 15 septembre 2010 (2010-09-15), pages 1-6, XP031809379, ISBN: 978-1-4244-5862-2
- TUUKKA NIEMINEN ET AL: "An enhanced multi-position calibration method for consumer-grade inertial measurement units applied and tested;An enhanced multi-position calibration method for consumer-grade inertial measurement units", MEASUREMENT SCIENCE AND TECHNOLOGY, IOP, BRISTOL, GB, vol. 21, no. 10, 13 août 2010 (2010-08-13) , page 105204, XP020198467, ISSN: 0957-0233, DOI: 10.1088/0957-0233/21/10/105204
- SYED Z F ET AL: "A new multi-position calibration method for MEMS inertial navigation systems", MEASUREMENT SCIENCE AND TECHNOLOGY, IOP, BRISTOL, GB, vol. 18, no. 7, 1 juillet 2007 (2007-07-01), pages 1897-1907, XP020118697, ISSN: 0957-0233, DOI: 10.1088/0957-0233/18/7/016

## Description

La présente invention concerne un procédé de calibration d'un ensemble inertiel comportant des accéléromètres et des capteurs angulaires.

Un ensemble inertiel comprend généralement trois accéléromètres et trois capteurs angulaires de type gyroscope ou gyromètre montés sur un bâti. Les accéléromètres et les capteurs angulaires ont des axes sensibles alignés sur les axes d'un repère de mesure et sont reliés à une unité de commande assurant l'acquisition et au moins une partie du traitement des signaux de mesure issus des accéléromètres et des capteurs angulaires.

Les accéléromètres et les capteurs présentent des défauts, comme des biais et des dérives, qu'il est nécessaire de connaître et prendre en compte dans le traitement des signaux de mesure pour améliorer la précision de l'ensemble inertiel.

A cette fin, il est généralement procédé à une calibration de l'ensemble inertiel avant l'utilisation de celui-ci.

La calibration vise à permettre une estimation de tout ou partie des biais et des dérives et à déterminer un jeu de paramètres de traitement des signaux de mesure permettant de minimiser tout ou partie de ces biais et dérives. La calibration est particulièrement utile pour la correction des erreurs liées aux biais accélérométriques qui sont quasi-constants sur les courtes durées d'utilisation.

Plusieurs procédés de calibration existent.

Le procédé le plus courant consiste à aligner successivement les axes sensibles des accéléromètres et des capteurs angulaires sur la verticale afin de faire mesurer à chaque accéléromètre l'accélération gravitationnelle et d'en déduire une erreur du capteur.

Ce mode de calibration extrêmement simple n'est cependant pas utilisable lorsque l'ensemble inertiel est monté sur un support ne permettant pas les différentes orientations nécessaires à la calibration.

Un autre procédé consiste à utiliser un ensemble inertiel de référence maintenu dans la même position que l'ensemble inertiel à calibrer et de déterminer le jeu de paramètres de traitement qui permet à l'ensemble inertiel à calibrer de fournir des mesures les plus proches de celles fournies par l'ensemble inertiel de référence.

Le jeu de paramètres de traitement est choisi pour minimiser au moins une partie des erreurs de l'ensemble inertiel à calibrer, mais est affecté des erreurs de l'ensemble inertiel de référence et des erreurs de positionnement de l'ensemble inertiel de référence par rapport à l'ensemble inertiel à calibrer.

La publication FONG W T ET AL: "Methods for in-field user calibration of an inertial measurement unit without external equipment",MEASUREMENT SCIENCE AND TECHNOLOGY, IOP, BRISTOL, GB, vol. 19, no. 8, 1 août 2008 (2008-08-01), 85202, XP020144339,ISSN: 0957-0233, divulgue une procédure d'étalonnage des accéléromètres d'un ensemble inertiel comportant également des gyroscopes et une procédure d'étalonnage des gyroscopes dudit ensemble inertiel.

La publication SAHAWNEH L ET AL: "Development and calibration of low cost MEMS IMU for UAV applications",MECHATRONICS AND ITS APPLICATIONS, 2008. ISMA 2008. 5TH INTERNATIONAL SYMPOSIUM ON, IEEE, PISCATAWAY, NJ, USA, 27 mai 2008 (2008-05-27), pages 1-9, XP031346512,ISBN: 978-1-4244-2033-9, divulgue aussi une procédure d'étalonnage des accéléromètres d'un ensemble inertiel comportant également des gyroscopes.

Un but de l'invention est de proposer un moyen de calibration qui soit simple tout en permettant de bonnes performances.

A cet effet, on prévoit, selon l'invention, un procédé de calibration d'accéléromètres d'un ensemble inertiel comportant également des capteurs angulaires, le procédé comprenant les étapes de :
- lors d'une première phase statique au cours de laquelle l'ensemble inertiel est dans une première position, effectuer des mesures au moyen des accéléromètres et des capteurs angulaires,
- lors d'une phase dynamique, déplacer l'ensemble inertiel, au moins en partie en azimut, de la première position vers une deuxième position tout en effectuant des mesures au moyen des capteurs angulaires,
- lors d'une deuxième phase statique au cours de laquelle l'ensemble inertiel est dans la deuxième position, effectuer des mesures au moyen des accéléromètres et des capteurs angulaires,
- estimer pour chaque phase statique une direction, une amplitude et une vitesse moyenne de rotation de la pesanteur vulgaire dans un repère inertiel, calculer une évolution d'orientation entre les phases statiques en utilisant les mesures effectués lors de la phase dynamique, et en déduire des biais des accéléromètres.

Ainsi, il est réalisé une calibration de manière rapide sans recourir à une référence extérieure d'attitude ou de force.

D'autres caractéristiques et avantages de l'invention ressortiront à la lecture de la description qui suit d'un mode de mise en oeuvre particulier non limitatif de l'invention.

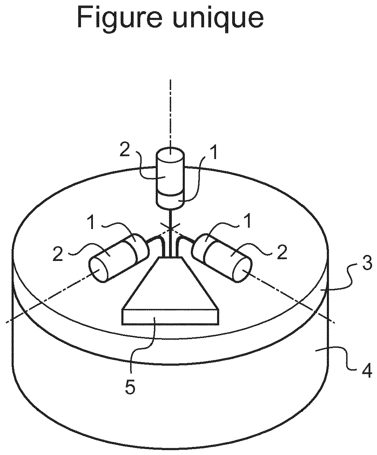

Il sera fait référence à la figure unique annexée représentant schématiquement en perspective un ensemble inertiel permettant la mise en oeuvre d'un procédé de calibration conforme à l'invention.

L'ensemble inertiel comprend de façon connue en elle-même trois accéléromètres 1 et trois capteurs angulaires 2, de type gyroscope ou gyromètre, montés sur un bâti 3 porté par un support orientable 4, ici un trépied, autorisant le pivotement du bâti autour d'un premier axe sensiblement aligné sur la verticale (pivotement en azimut) et comprend un moyen d'orientation permettant un débattement angulaire limité du premier axe autour de la verticale. Les accéléromètres et les capteurs angulaires ont des axes sensibles alignés sur les axes X, Y, Z d'un repère de mesure et sont reliés à une unité de commande 5.

L'unité de commande 5 comprend des moyens de calcul, comme un microprocesseur, et une mémoire contenant un programme de commande et de traitement destiné à être exécuté par les moyens de calcul.

Le programme de commande et de traitement est agencé de manière connue en elle-même pour assurer l'acquisition et au moins une partie du traitement des signaux de mesure issus des accéléromètres 1 et des capteurs angulaires 2.

Le programme de commande et de traitement est en outre agencé pour mettre en oeuvre un procédé de calibration permettant de déterminer un jeu de paramètres de traitement utilisé par ledit programme lors du traitement des signaux de mesure. Le procédé de calibration conforme à l'invention vise à déterminer le jeu de paramètres de traitement permettant de minimiser les biais des accéléromètres 1 et peut être associé à un autre procédé de calibration visant à minimiser d'autres erreurs, notamment d'autres erreurs des accéléromètres et/ou des erreurs des capteurs angulaires ou de la chaîne d'acquisition et de traitement des signaux de mesure.

Le procédé de l'invention comprend les étapes de :
- lors d'une première phase statique au cours de laquelle l'ensemble inertiel est dans une première orientation, effectuer des mesures au moyen des accéléromètres et des capteurs inertiels de rotation,
- lors d'une phase dynamique, déplacer l'ensemble inertiel, au moins en partie en azimut, de la première orientation vers une deuxième orientation tout en effectuant des mesures au moyen des capteurs inertiels de rotation,
- lors d'une deuxième phase statique au cours de laquelle l'ensemble inertiel est dans la deuxième position, effectuer des mesures au moyen des accéléromètres et des capteurs inertiels de rotation.

Le déplacement lors de la phase dynamique est ici une rotation autour du premier axe. Il faut que la rotation soit suffisamment rapide pour que l'erreur d'attitude des accéléromètres soit peu affectée par les biais des capteurs inertiels de rotation.

L'unité de commande 5 effectue alors un traitement des signaux de mesure pour estimer pour chaque phase statique une direction, une amplitude et une vitesse moyenne de rotation de la pesanteur vulgaire dans un repère inertiel. Ceci est obtenu en intégrant, de manière connue en elle-même, les signaux de mesure provenant des accéléromètres 1 pour chaque phase statique. Il est également procédé au calcul d'une évolution d'orientation entre les phases statiques par intégration des signaux de mesure provenant des capteurs angulaires 2 lors de la phase dynamique. Les biais des accéléromètres 1 sont ensuite déduits à partir des estimations et calcul précédemment réalisés. L'intégration des signaux de mesure est effectuée de manière classique par un traitement numérique après échantillonnage des signaux, l'intégration portant sur la valeur de la portion de signal à chaque pas de temps (couramment appelé incrément de vitesse ou angulaire selon la provenance des signaux de mesure).

Les biais accélérométriques sont déterminés par la méthode des moindres carrés pour minimiser des déplacements mesurés pendant les phases statiques. En effet, du fait des biais accélérométriques, il est possible, si ce n'est probable, que les signaux de mesure produits par les accéléromètres lors des phases statiques soit révélateurs d'un déplacement alors même que l'ensemble inertiel était sensiblement immobile. L'estimation des biais permet de déterminer un jeu de paramètres de traitement tels que, avec ces paramètres de traitement, l'unité de commande 5 puisse corriger lesdits signaux de mesure de telle manière qu'ils correspondent à une absence de déplacement.

Ce mode de mise en oeuvre est particulièrement intéressant car il est robuste et peu gourmand en ressources (il ne nécessite pas de réaliser l'ensemble des calculs de navigation inertielle).

Selon une caractéristique avantageuse de l'invention, l'unité de commande est programmée pour, dès qu'elle est activée, lancer une calibration dès qu'un couple de phases statiques séparées par une rotation suffisamment ample et rapide est détecté.

Les phases statiques peuvent être détectées au moyen des signaux de mesure provenant des accéléromètres et des capteurs inertiels de rotation ou à partir de signaux d'un détecteur qui serait solidaire du support, et par exemple des poignées de manipulation du support, pour détecter la préhension (et donc de possibles manipulations) dudit support par l'opérateur.

A l'issue de la calibration, on peut prévoir de :
- prendre en compte automatiquement les biais estimés (et le calcul des jeux de paramètres) ; ou
- informer l'opérateur que les biais ont été estimés et lui proposer leur prise en compte directement par l'unité de commande 5 ou le transfert de leurs valeurs vers un dispositif de traitement ou d'enregistrement de données relié à l'unité de commande 5. L'ensemble inertiel peut également être couplé à un autre dispositif de repérage spatial qui est susceptible d'exploiter les données fournies par l'unité de commande ou qui est susceptible de fournir à l'unité de commande 5 des données exploitables par l'unité de commande 5 pour améliorer la précision de l'ensemble inertiel.

En variante, on peut prévoir que la calibration soit lancée par l'opérateur. L'unité de commande 5 comprend alors de préférence un afficheur permettant de guider l'opérateur dans l'enchaînement des phases statiques et dynamique. Lorsque le support comprend un dispositif de freinage ou de blocage pour le maintenir en position, il est possible d'utiliser l'information d'activation du dispositif de freinage ou de blocage pour détecter une phase statique.

En variante également, des mesures peuvent être effectuées au moyen des accéléromètres lors de la phase dynamique.

En variante également, il est possible de réduire la sensibilité de l'estimation aux mouvements en phases statiques. Les biais accélérométriques sont déterminés par la méthode des moindres carrés pour minimiser des déplacements mesurés pendant les phases statiques d'un point solidaire de l'ensemble inertiel tenant compte d'un bras de levier connu entre l'ensemble inertiel et un point fixe, par exemple le centre de l'articulation permettant d'orienter le support.

Il est alors procédé au calcul de l'évolution d'orientation entre les phases statiques par intégration des signaux de mesure provenant des capteurs inertiels de rotation 2 et des accéléromètres 1 lors de la phase dynamique. Ceci est par exemple réalisé au moyen d'un filtre de Kalman. Ceci permet d'estimer les biais mais également au moins une partie des dérives moyennes des capteurs angulaires améliorant la précision de la calibration. Les meilleures performances sont obtenues lorsque le déplacement lors de la phase statique n'est pas réalisé dans un plan horizontal. Dans l'hypothèse où le déplacement serait trop horizontal, l'unité de traitement est programmée pour négliger les dérives. Cette variante de mise en oeuvre présente également l'avantage de ne pas nécessiter d'informer le programme depuis l'extérieur du système du début et de la fin des phases statiques.

En variante encore, il est possible d'améliorer la précision de la calibration en tenant compte de la latitude, de l'altitude, de la position du point de navigation de l'ensemble inertiel par rapport au point d'articulation autour duquel est pivoté l'ensemble inertiel. La connaissance de la latitude permet par exemple de compenser la rotation terrestre pendant la phase dynamique et donc de réduire les erreurs d'estimation des biais dans le cas où la dérive des capteurs angulaires engendre plus d'erreur de vitesse que les rampes des biais accélérométriques.

En variante, il est possible de fournir une estimation des trois dérives de l'ensemble inertiel lorsque la rotation est réalisée en phase mobile selon un axe suffisamment éloigné de la verticale et si la durée des phases statiques est suffisante pour la précision d'estimation désirée.

De préférence, le programme de traitement est agencé pour tolérer lors des phases statiques un déplacement en translation de un à quelques centimètres et en rotation de plusieurs milliradians, variable selon la précision nécessaire.

Bien entendu, l'invention n'est pas limitée au mode de mise en oeuvre décrit mais englobe toute variante entrant dans le champ de l'invention telle que définie par les revendications.

## Revendications

1. Procédé de calibration d'accéléromètres (1) d'un ensemble inertiel comportant également des capteurs inertiels de rotation (2), comprenant les étapes de :
- lors d'une première phase statique au cours de laquelle l'ensemble inertiel est dans une première orientation, effectuer des mesures au moyen des accéléromètres et des capteurs inertiels de rotation,
- lors d'une phase dynamique, changer l'orientation de l'ensemble inertiel, au moins en partie en azimut, de la première orientation vers une deuxième orientation tout en effectuant des mesures au moyen des capteurs inertiels de rotation,
- lors d'une deuxième phase statique au cours de laquelle l'ensemble inertiel est dans la deuxième position, effectuer des mesures au moyen des accéléromètres et des capteurs inertiels de rotation,
- estimer une direction, une amplitude et une vitesse moyenne de rotation de la pesanteur vulgaire dans un repère inertiel pour chaque phase statique, calculer une évolution d'orientation pendant la phase dynamique entre les phases statiques en utilisant les mesures effectuées lors de la phase dynamique, et en déduire des biais des accéléromètres.

2. Procédé selon la revendication 1, dans lequel les biais accélérométriques sont déterminés par la méthode des moindres carrés conjointement avec la première orientation initialement déterminée de manière à minimiser des déplacements mesurés pendant les phases statiques.

3. Procédé selon la revendication 1, dans lequel des mesures sont effectuées au moyen des accéléromètres lors de la phase dynamique.

4. Procédé selon la revendication 1, dans lequel le procédé est lancé automatiquement après détection d'un couple de phases statiques.

5. Procédé selon la revendication 1, comprenant l'étape de déduire de l'évolution calculée, si la rotation en phase intermédiaire le permet, les dérives.

## Patentansprüche

1. Verfahren zur Kalibrierung von Akzelerometern (1) einer inertialen Einheit, die auch inertiale Rotationsensoren (2) umfasst, umfassend die Schritte:
- während einer ersten statischen Phase, während der die inertiale Einheit in einer ersten Ausrichtung ist, Durchführen von Messungen mit Hilfe der Akzelerometer und der inertialen Rotationssensoren;
- während einer dynamischen Phase Ändern der Ausrichtung der inertialen Einheit, zumindest teilweise im Azimut, von der ersten Ausrichtung in eine zweite Ausrichtung, während Messungen mittels der inertialen Rotationssensoren durchgeführt werden,
- während einer zweiten statischen Phase, während der die inertiale Einheit in der zweiten Position ist, Durchführen von Messungen mit Hilfe der Akzelerometer und der inertialen Rotationssensoren,
- Schätzen einer Richtung, einer Amplitude und einer mittleren Drehgeschwindigkeit der gewöhnlichen Schwerebeschleunigung in einem inertialen Bezugssystem für jede statische Phase, Berechnen einer Entwicklung der Ausrichtung während der dynamischen Phase zwischen den statischen Phasen, indem die während der dynamischen Phase durchgeführten Messungen verwendet werden,
und daraus Herleiten der systematischen Messabweichungen der Akzelerometer.

2. Verfahren nach Anspruch 1, bei dem die akzelerometrischen systematischen Messabweichungen durch die Methode der kleinsten Quadrate zusammen mit der anfänglich bestimmten ersten Ausrichtung bestimmt werden, derart, dass die während der statischen Phasen gemessenen Bewegungen auf ein Minimum herabgesetzt werden.

3. Verfahren nach Anspruch 1, bei dem die Messungen mit Hilfe der Akzelerometer während der dynamischen Phase durchgeführt werden.

4. Verfahren nach Anspruch 1, bei dem das Verfahren nach Erfassung eines Paares statischer Phasen automatisch gestartet wird.

5. Verfahren nach Anspruch 1, umfassend den Schritt des Herleitens der Driften aus der berechneten Entwicklung, wenn die Rotation in der Zwischenphase dies zulässt.

## Claims

1. A method of calibrating accelerometers (1) of an inertial unit having also inertial rotation sensors (2), the method being **characterized in that** it comprises the following steps:
· during a first static stage, in which the inertial unit is in a first orientation, taking measurements by means of the accelerometers and the inertial rotation sensors;
during a dynamic stage, changing the orientation of the inertial unit, at least in part in azimuth, from the first orientation towards a second orientation, while taking measurements by means of the inertial rotation sensors;
· during a second static stage, in which the inertial unit is in the second position, taking measurements by means of the accelerometers and of the inertial rotation sensors; and
· estimating a direction, an amplitude, and a mean speed of rotation for apparent gravity in an inertial frame of reference for each static stage, calculating variation in orientation between the static stages during the dynamic stage using movements taken during the dynamic stage, and deducing therefrom the accelerometer biases.

2. A method according to claim 1, wherein the accelerometer biases are determined by the least squares method jointly with the initially determined first orientation in such a manner as to minimize the movements measured during the static stages.

3. A method according to claim 1, wherein the measurements are performed by means of the accelerometers during the dynamic stage.

4. A method according to claim 1, wherein the method is launched automatically after detecting a pair of static stages.

5. A method according to claim 1, comprising the step of deducing from the calculated variation, if the rotation in the intermediate stage makes this possible, the drifts.
